# EUROPEAN PATENT APPLICATION

(11) **EP 1 725 029 A1**
(43) Date of publication of application: **22.11.2006**
(21) Application number: 06113871.5
(22) Date of filing: 12.05.2006
(51) Int. Cl.: H04N 5/76

(54) **Digital video recording apparatus and method thereof**

(30) Priority: 16.05.2005 KR 2005040753
(71) Applicant: Samsung Electronics Co., Ltd., Suwon-si 442-742 Gyeonggi-Do (KR)
(72) Inventor: Park, Pan-gie, Jukejeon 1-dong Yongin-si Gyeonggi-do (KR); Lim, Pung-hwan, Jukgeon 1-dong Yongin-si Gyeonggi-do (KR); Lee, Cheon-seong 326-601, Cheongmyeong-maeul, Suwon-si Gyeonggi-do (KR)
(74) Representative: Robinson, Ian Michael

(57) **Abstract**

A digital video recording apparatus is provided with the ability to permit a user to record images while watching those images without any time delay. The digital video recording apparatus includes an ADC (114) for analog-to-digital converting and outputting either demodulated analog broadcast signals of a selected channel or analog AV signals inputted from an external device, an MPEG encoder (116) for MPEG-encoding the ADC (114) output in order to create stream data, a record-play unit (118) for controlling so that data can be recorded onto or read from a recording medium, a background memory (124) for buffering the stream data by a certain unit, and a controller (136) for controlling so as to combine the stream data that is buffered in the background memory (124) and the stream data that is encoded and created by the MPEG encoder (116) subsequent to the buffered stream data, and to store the combined data into a recording medium, when a recording command is entered.

## Description

The present invention relates generally to a digital video recording apparatus and a method thereof. More specifically, the present invention relates to a digital video recording apparatus and method for preventing omission of recording data during an actual recording operation starting from the recording request by a user.

In general, a digital video recording apparatus is used to convert analog broadcasting signals or analog audio and video (AV) signals inputted from external devices into digital data, encode the digital data using an encoding and compression system for digital video and sound in a compressed format, as defined by the Motion Pictures Expert Group (MPEG), record encoded data onto a recording medium, such as an optical disc or a hard disc, and subsequently, reproduce data recorded on the recording medium.

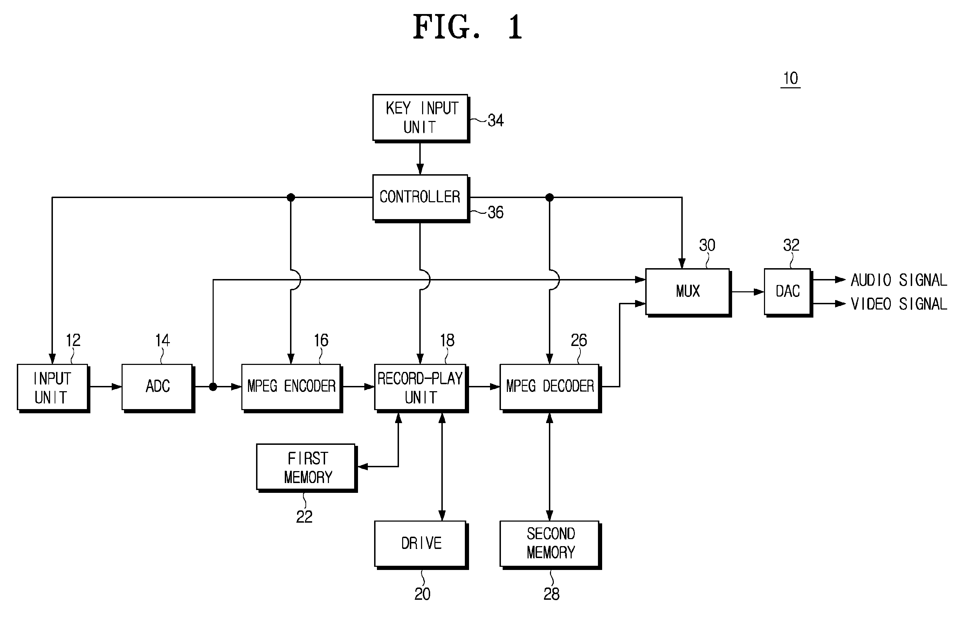

Figure 1 is a block diagram of a typical digital video recording apparatus. Referring to Figure 1, a typical digital video recording apparatus 10 comprises an input unit 12, an analog to digital converter (ADC) 14, an MPEG encoder 16, a record-play unit 18, a drive 20, a first memory 22, an MPEG decoder 26, a second memory 28, a MUX 30, a digital to analog converter (DAC) 32, a key input unit 34, and a controller 36.

The input unit 12 demodulates and outputs broadcast signals of a channel selected by a user among the analog broadcast signals received through an antenna, or receives analog AV signals from external devices, such as televisions or personal computers (PCs).

The ADC 14 converts the analog signals received through the input unit 12 into digital signals. The MPEG encoder 16 MPEG-encodes the digital signals outputted from the ADC 14, and outputs MPEG stream data.

The drive 20 records data onto a recording medium, such as an optical disc or a hard disc mounted thereon, or reads the recorded data from the recording medium. The record-play unit 18 controls the drive 20 to record the stream data outputted from the MPEG encoder 16 onto the recording medium that is mounted on the drive 20, or to reproduce the data recorded on the recording medium. At this time, the first memory 22 is used as a data buffer.

The MPEG decoder 26 decodes and outputs the decoded data of the stream data outputted from the record-play unit 18. At this time, the second memory 28 is used as a data buffer. The MUX 30 selectively transfers the output of either the ADC 14 or the MPEG decoder 26 to the DAC 32. The DAC 32 converts input signals into displayable analog audio and video signals, and outputs the converted signals.

The key input unit 34 receives a user's control commands. The controller 36 controls overall operations of the digital video recording apparatus 10 according to the user's control commands entered through the key input unit 34.

In the example digital video recording apparatus 10 having such a configuration, as shown in Figure 1, procedures recording input signals onto recording media can be described in detail herein below.

First, the user sets a channel desired to watch, via the input unit 12, or selects an external input, via an external device, such as a TV or PC. Accordingly, the corresponding analog signals are outputted from the input unit 12 or from the external device (not shown). The analog signals outputted from the input unit 12 or from the external device (not shown) are analog-to-digital converted at the ADC 14. The digital video and audio signals outputted from the ADC 14 are inputted into the DAC 32 through the MUX 30, digital-analog converted, and outputted as audio and video signals that are reproducible at a display unit (not shown). Then, these procedures are repeatedly performed so long as the input is not changed.

Under the control of the controller 36, the MUX 30 makes the digital signals outputted from the ADC 14 be inputted into the DAC 32 in a mode other than a play mode, and makes the digital signals outputted from the MPEG decoder 26 be inputted into the DAC 32 in the play mode where the data recorded on a recording medium is reproduced.

The digital signals outputted from the ADC 14 are inputted into the MPEG encoder 16 at the same time. If a record key is entered through the key input unit 34 and transferred to the controller 36, the signals inputted into the MPEG encoder 16 starts to be encoded, and thus recording operation is performed. In order to perform such a recording operation, stream data is buffered into the first memory 22 accessible by the record-play unit 18. Stream information is extracted to create the information on the buffered stream data, and then the stream data is recorded onto a recording medium mounted on the drive 20, by the drive 20. The stream information, which is recorded separately from the stream data, is information required to reproduce and edit the stream data, or to perform a trick play. Such procedures are repeated until the recording operation is stopped. When the recording operation is terminated, the information created on the basis of the stream information is recorded, and the recording operation is completed.

In the play mode, the record-play unit 18 reads data from the recording medium mounted on the drive 20, buffers the read data into the first memory 22, and outputs the read data to the MPEG decoder 26. The data decoded at the MPEG decoder 26 is outputted through the MUX 30.

However, in a case where a user unexpectedly wishes to record images while watching a video displayed through a digital video recording apparatus 10, a certain time generally passes after pressing a record button. As a result, scenes displayed from a certain time after the scene that a user desired to record on a recording medium can be recorded. While the time required for pressing a record button varies with a personal response time and a delay time differs depending upon the situation at that time, such a recording time delay generally exists.

According to the present invention there is provided an apparatus and method as set forth in the appended claims. Preferred features of the invention will be apparent from the dependent claims, and the description which follows.

Various aspects and example embodiments of the present invention advantageously provide a digital broadcast recording apparatus and a method for preventing the initial recording data from failing to be recorded so that a user can record scenes from the point when he or she desires to record.

According to one aspect of the present invention, there is provided a digital video recording apparatus comprising an ADC for analog-to-digital converting and outputting either demodulated analog broadcast signals of a selected channel or analog audio and video (AV) signals inputted from an external device, an MPEG encoder for MPEG-encoding the output from the ADC to create an encoded data stream, a record-play unit for controlling such that data can be recorded onto or read from a certain recording medium, a background memory for buffering the encoded data stream by a certain unit, and a controller for controlling the record-play unit, when a recording command is entered, in such a way as to combine the data stream that is buffered in the background memory and data stream that is encoded and created by the MPEG encoder subsequent to the buffered stream data, and to store the combined data on the recording medium.

Preferably, the digital video recording apparatus further comprises an MPEG decoder for decoding data outputted from the record-play unit, a digital-to-analog converter (DAC) for converting input data into displayable video and audio signals, and a multiplexer (MUX) for selectively outputting either the output of the ADC or the output of the MPEG decoder to the DAC under control of the controller.

Preferably, the digital video recording apparatus further comprises a key input unit for transferring a user's control command including a recording command to the controller. A certain unit is preferably a GOP (Group Of Picture) unit in accordance with a MPEG standard, and the recording medium can be either an optical disc or a hard disc.

According to another aspect of the present invention, there is provided a recording method in a digital video recording apparatus comprising the steps of analog-to-digital converting either demodulated analog broadcast signals of a selected channel or analog audio and video (AV) signals inputted from an external device, MPEG-encoding the analog-to-digital converted signals in order to create encoded data stream, buffering the encoded stream data by a certain unit, and, when a recording command is entered, combining buffered stream data and the stream data that is MPEG-encoded and created subsequently to the buffered stream data and storing onto a recording medium. Preferably, the recording method further comprises the step of converting the analog-to-digital converted signals into displayable video and audio signals for a visual display.

In addition to the example embodiments and aspects as described above, further aspects and embodiments of the present invention will be apparent by reference to the drawings and by study of the following descriptions.

For a better understanding of the invention, and to show how embodiments of the same may be carried into effect, reference will now be made, by way of example, to the accompanying diagrammatic drawings in which:
Figure 1 is a block diagram of a typical digital video recording apparatus;
Figure 2 is a block diagram of a digital video recording apparatus according to an embodiment of the present invention;
Figure 3 is a flowchart illustrating a process of converting input analog signals into displayable signals in a digital video recording apparatus according to an embodiment of the present invention;
Figure 4 is a flowchart illustrating a recording method in a digital video recording apparatus according to an embodiment of the present invention; and
Figure 5 is a schematic view of an MPEG stream data structure according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

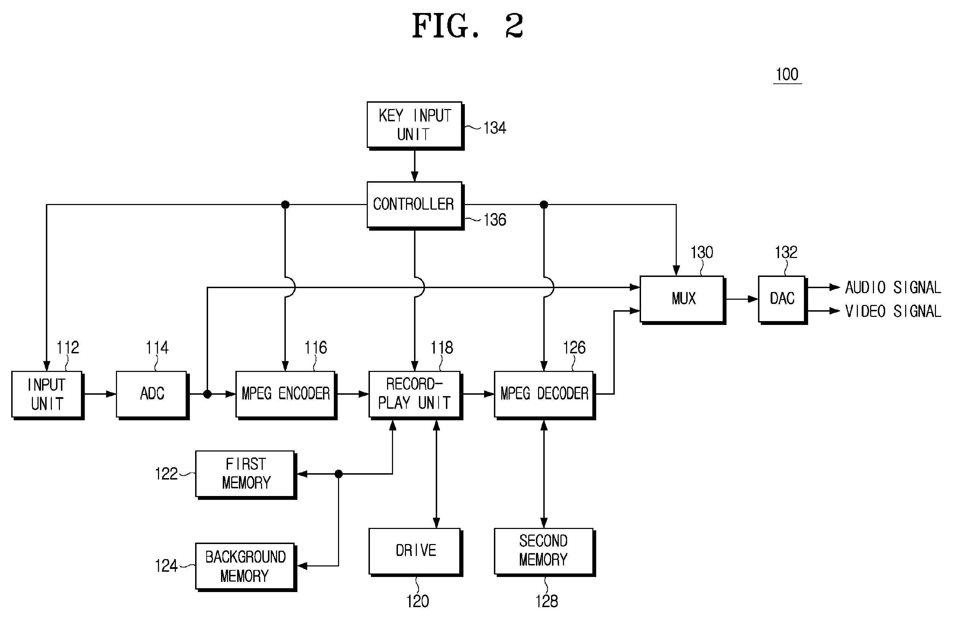

Figure 2 is a block diagram of a digital video recording apparatus according to an embodiment of the present invention. Referring to Figure 2, the digital video recording apparatus 100 comprises an input unit 112, an analog to digital converter (ADC) 114, an MPEG encoder 116, a record-play unit 118, a drive 120, a first memory 122, a background memory 124, an MPEG decoder 126, a second memory 128, a multiplexer (MUX) 130, a digital to analog converter (DAC) 132, a key input unit 134, and a controller 136.

The input unit 112 demodulates and outputs broadcast signals of a channel selected by a user among the analog broadcast signals received through an antenna, or receives analog audio and video (AV) signals from external devices, such as PCs.

The ADC 114 converts the analog signals received through the input unit 112 into digital signals. The MPEG encoder 116 MPEG-encodes the digital signals outputted from the ADC 114, and outputs MPEG data stream. Such an encoder 116 is provided with a range of compression mechanisms, and can select the most appropriate compression mechanism to provide high picture quality for a given transmission bit rate.

The drive 120 records data stream onto a recording medium such as an optical disc or a magnetic disc, or reads the recorded data stream from such recording media. Examples of a magnetic disc include, for example, a floppy disk, a flexible disk, hard disk, magnetic tape, and any other magnetic medium. Similarly, examples of an optical disc include, for example, DVD, DVD-R, DVD-RW, DVD+RW, DVD-RAM, DVD-ROM, CD, CD-R, CD-RW, CD-ROM or any other high-density optical medium, such as blue-ray disc (BD) and advanced optical disc (AOD). The record-play unit 118 controls the drive 120 to record the data stream outputted from the MPEG encoder 116 onto the recording medium mounted on the drive 120, or reproduces the data stream recorded on the recording medium. At this time, the first memory 122 is used as a data buffer, and the background memory 124 is used as a buffer when performing a background recording operation to be explained later.

The MPEG decoder 126 MPEG-decodes the data stream outputted from the record-play unit 118, and outputs decoded data stream. Similarly to the MPEG encoder 116, the MPEG decoder 126 is also provided with various decompression mechanisms and other capabilities, including the ability to handle high quality video, ability to cope with errors and connection options. At this time, the second memory 128 is also used as a data buffer. The MUX 130 selectively transfers the output of either the ADC 114 or the MPEG decoder 126 to the DAC 132. The DAC 132 converts the input signals into displayable analog audio and video signals, and outputs the converted signals.

The key input unit 134 receives a user's control command. The controller 136 controls overall operations of the digital video recording apparatus 100, as shown in Figure 2, according to the user's control command entered through the key input unit 134.

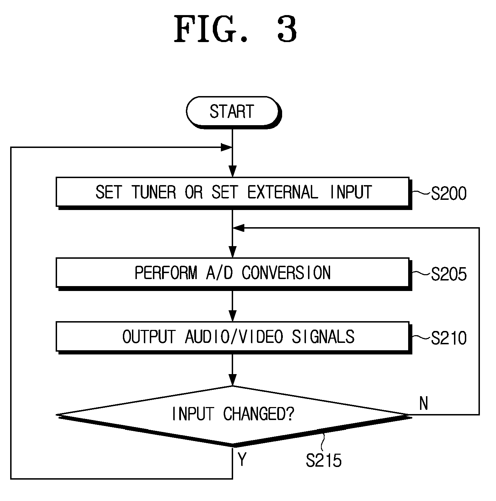

Figure 3 is a flowchart illustrating a process of converting input analog signals into displayable signals in a digital video recording apparatus according to an embodiment of the present invention. Referring to Figures 2 and 3, a user sets a tuner to a channel that the user desires to watch, via the input unit 112, or selects an external input, via an external device at operation S200. Accordingly, the input unit 112 outputs analog audio and video signals, and the ADC 114 performs an analog-to-digital conversion based on the analog audio and video signals at operation S205.

In the case of a normal watch mode, digital audio and video signals outputted from the ADC 114 are transferred to the DAC 132 through the MUX 130. The DAC 132 converts input signals, via the MUX 130, into displayable audio and video signals, and outputs converted audio and video signals in an analog form at operation S210. If an input is not changed, via the input unit 12 at operation S215, the procedures of performing an analog-to-digital conversion, via the ADC 114, and outputting audio and video signals at operations S205 and S210 are repeated. Through these procedures, the signals received through the input unit 112 can be converted into displayable audio and video signals, and reproduced on a display unit (not shown).

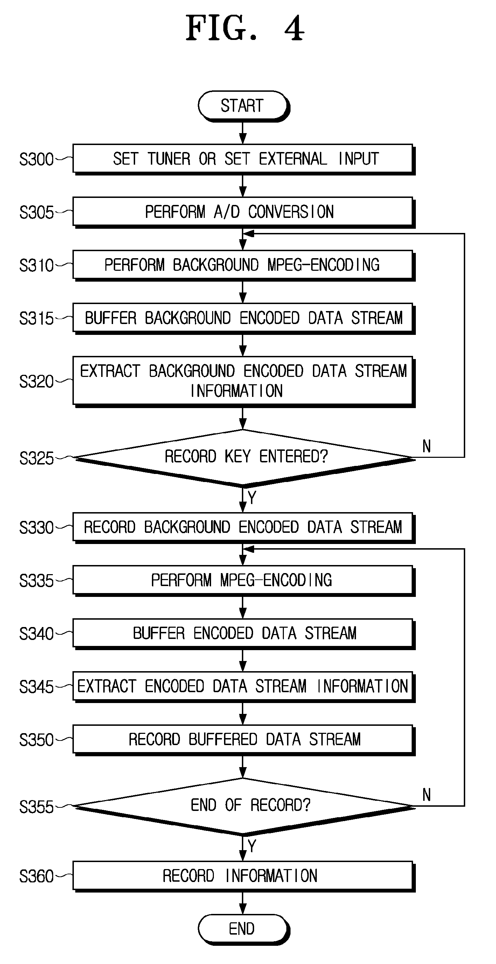

Figure 4 is a flowchart illustrating a method of recording signals received through the input unit 112 onto a recording medium mounted on a drive 120 in the digital video recording apparatus 100 according to an embodiment of the invention. Referring to Figures 2 and 4, a user sets a tuner to a desired channel, via the input unit 112, or selects an external input, via an external device at operation S300. Accordingly, analog audio and video signals are outputted from the input unit 112, and the analog signals are analog-to-digital converted at the ADC 114 at operation S305.

Digital data outputted from the ADC 114 is transferred to the MUX 130 and the MPEG encoder 116 at the same time. The MUX 130 multiplexes and selects an output based on data outputted from the ADC 114 and data outputted from the MPEG decoder 126 under control of the controller 136. During a normal mode of operation, the MUX 130 selects and outputs data from the ADC 114 for a digital-to-analog conversion at the DAC 132, such that data recorded on recording media can be reproduced. During a play mode of operation, the MUX 130 selects and outputs data from the MPEG decoder 126 for a digital-to-analog conversion at the DAC 132. In other words, output data of the ADC 114 can be transferred to the DAC 132 through the MUX 130 so as to be converted into displayable data. At the same time, MPEG-encoded at the MPEG encoder 116 and transferred to the recode-play unit 118 so as to be recorded onto the recording medium mounted on the drive 120.

When data is outputted from the ADC 114, a background recording process is performed. The background recording process is performed regardless of a user's recording command. The MPEG encoder 116 performs background MPEG-encoding of data outputted from the ADC 114 at operation S310, and encoded data stream is transferred to the record-play unit 118. Accordingly, the record-play unit 118 buffers the input encoded data stream on an accessible area of the background memory 124 by a certain unit regardless of a user's record command at operation S315. The encoded data stream is not actually recorded onto the recording medium mounted on the drive 120; rather, the encoded data stream is recorded in the area of the background memory 124. Next, the information on the background encoded data stream is extracted at operation S320.

The background memory 124 can be implemented as a first-in/first-out (FIFO) memory having a certain size. In this case, if the background memory 124 is overflowed, the first recording area may be overwritten. That is, the background recording process is always performed as much as the size of the background memory 124 that has a certain size. Therefore, data recently displayed to a user, via a display unit (not shown), is always stored in the area of the background memory 124.

During a background recording process in operations S310 and S320, the digital video recording apparatus 100 determines whether a record key (button) is entered by a user through the key input unit 134 at operation S325. If a record key is not entered, via the key input unit 134, the background recording processes at operations S310 to S320 are repeated.

By contrast, if a record key (button) is entered through the key input unit 134 while the background recording operation is in progress, the record-play unit 118 records the data recorded in the background memory 124, i.e., background encoded data stream, onto the recording medium mounted on the drive 120 at operation S330, buffers the encoded data stream inputted through the MPEG encoder 116 in the first memory 118, which is accessible by the record-play unit 118, in order to record without omission at operation S340, extracts information needed to create the information on the buffered data at operation S345, and records the buffered data stream onto the recording medium through the drive 120 at operation S350. These procedures are repeatedly performed until the recording operation is completed.

When the recording operation is stopped, information created based on the stream information extracted in operation S345 is recorded at operation S360, and the recording operation is completed. At this point, the recorded information relates to all the stream data being recorded, and contains the information on the background stream data recorded in the area of the background memory 124 and on the stream data recorded thereafter.

If a user presses a record button, via the key input unit 134, while the background recording operation is performed, all the operations in process continue until a certain unit of encoding, i.e., a GOP (Group of Picture) in accordance with the MPEG standard, is completed, and then normal operations such as MPEG-encoding, buffering, information extracting, and the like are performed. These are characteristics of the MPEG data stream.

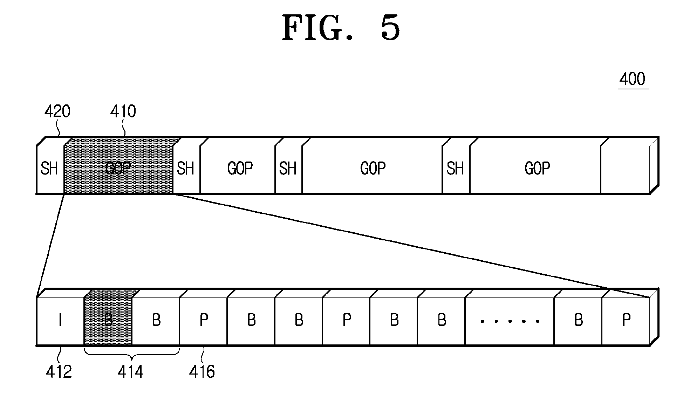

Figure 5 illustrates an example MPEG data stream according to an embodiment of the present invention. As shown in Figure 5, the MPEG data stream 400 is created from a series of three different types of data frames (intra frames, forward predictive frames and bidirectional predicted frames) encoding pictures that can be arranged in a specified order called the GOP structure 410 (GOP = Group of Pictures) with a sequence header (SH) 420 provided for every GOP 410. The three ways of encoding a picture (or image) are: intra-coded (I picture) 412, forward predictive (P picture) 414 and bidirectional predictive (B picture) 416. The GOP structure 410 is typically provided with a sequence of I_BB_P_BB_P_BB_P_BB ... B_P, as shown in Figure 5. Since an I picture is needed in order to decode and display subsequent B and P pictures, it is generally desirable to process recording operations by a GOP (Group Of Picture) unit starting with an I picture.

As described from the foregoing, the initial recording data according to an embodiment of the present invention can be prevented from failing to be recorded, from the point when a user presses a record button to the point where an actual recording operation is started in a digital video recording apparatus 100. Accordingly, user's satisfaction can be enhanced because it is possible to record video (images) from when a user presses a record button, via the key input unit 134, while viewing the video displayed, onto a recording medium.

While the present invention has been particularly shown and described with reference to exemplary embodiments thereof, it will be understood by those of ordinary skill in the art that various changes in form and details may be made therein. For example, the digital video recording apparatus can also be, albeit in whole or in part, a drive system which can be internal (housed within a host) or external (housed in a separate box that connects to a host). A recording apparatus having a different structure may also be utilized as long as key functionalities are captured to eliminate a time delay in recording AV signals upon a user's request. In addition, MPEG standards such as MPEG-1, MPEG-2, MPEG-4, MPEG-7 and MPEG-21 may be employed. Similarly, the system controller can be implemented as a chipset having firmware, or alternatively, a general or special purposed computer programmed to implement methods as described with reference to Figure 3, Figure 4 and Figure 5.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital video recording apparatus comprising:
an analog to digital converter (ADC) (114) for converting demodulated analog broadcast signals of a selected channel or analog audio and video (AV) signals inputted from an external device into a digital form;
an MPEG encoder (116) for MPEG-encoding an output from the ADC (114) to create a data stream;
a record-play unit (118) for controlling to record and read data on and from a recording medium;
a background memory (124) for buffering the data stream by a certain unit; and
a controller (136) for controlling the record-play unit (118), when a recording command is entered by a user, to combine the data stream that is buffered in the background memory (124) and the data stream that is created by the MPEG encoder (116) subsequent to the buffered data stream, and to the record combined data on the recording medium.

2. The digital video recording apparatus as claimed in claim 1, further comprising:
an MPEG decoder (126) for decoding data outputted from the record-play unit (118);
a digital to analog converter (DAC) (132) for converting input data into analog displayable video and audio signals; and
a multiplexer for selectively outputting either an output of the ADC (114) or an output of the MPEG decoder (126) to the DAC (132) under control of the controller (136).

3. The digital video recording apparatus as claimed in claim 1 or 2, further comprising:
a key input unit (134) for transferring a user's control command including the recording command to the controller (136).

4. The digital video recording apparatus as claimed in any preceding claim, wherein the certain unit is a group of picture (GOP) unit in accordance with a MPEG standard.

5. The digital video recording apparatus as claimed in any preceding claim, wherein the recording medium is one of an optical disc and a hard disc mounted on a drive.

6. A recording method for use in a digital video recording apparatus, comprising:
performing an analog-to-digital conversion of demodulated analog broadcast signals of a selected channel or analog audio and video (AV) signals inputted from an external device;
MPEG-encoding converted signals to create a data stream;
buffering the data stream by a certain unit; and
combining buffered data stream and the data stream data that is MPEG-encoded and created subsequently to the buffered data stream, and storing onto a recording medium when a recording command is entered.

7. The method as claimed in claim 6, further comprising:
performing a digital-to-analog conversion of the converted signals into displayable video and audio signals for a visual display on a screen.

8. The method as claimed in claim 6 or 7, wherein the certain unit is a group of picture (GOP) unit in accordance with a MPEG standard.

9. The method as claimed in claim 6, 7 or 8, wherein the recording medium is one of an optical disc and a hard disc mounted on a drive.

10. A digital video recording apparatus, comprising:
a first converter (114) arranged to convert an AV signal into data in a digital format, the AV signal representing one of a broadcast signal of a channel selected by a user received via an antenna, and a feed signal received via an external device;
an encoder (116) arranged to encode data output from the first converter (114) in accordance with a predetermined standard to generate a data stream;
a record-play unit (118) arranged to control recording of the data stream onto a recording medium and reproduction of the recorded data stream from the recording medium;
a background memory (124) arranged to buffer the data stream by a designated unit; and
a controller (136) arranged to control the record-play unit (118), when a recording command is input by the user, to combine the data stream that is buffered in the background memory (124) and the data stream that is encoded by the encoder (116) subsequent to the buffered data stream, and to record a combined data stream on a recording medium.

11. The digital video recording apparatus as claimed in claim 10, further comprising a drive system (120) including the recording medium mounted thereon for recording the combined data stream on the recording medium.

12. The digital video recording apparatus as claimed in claim 10 or 11, further comprising:
a decoder (126) arranged to decode a data stream output from the record-play unit (118) in accordance with the MPEG standard to generate a decoded data stream;
a multiplexer (130) arranged to selectively output the data output from the converter during a normal video mode, and to output the decoded data stream output from the decoder (126) during a record/play mode under control of the controller (136); and
a second converter (132) arranged to convert data from the multiplexer (130) into analog displayable video and audio signals for a visual display on a screen.

13. The digital video recording apparatus as claimed in claim 10, 11 or 12, further comprising:
a key input unit for transferring control commands including the recording command to the controller (136).

14. The digital video recording apparatus as claimed in any of claims 10 to 13, wherein the designated unit of the data stream buffered in the background memory (124) is a group of picture (GOP) unit in accordance with a MPEG standard.

15. The digital video recording apparatus as claimed in any of claims 10 to 14, wherein the recording medium is one of an optical disc and a hard disc mounted on a drive system (120).

16. The digital video recording apparatus as claimed in any of claims 10 to 15, wherein the background memory (124) is a first-in/first-out (FIFO) memory having a predetermined size.

17. The digital video recording apparatus as claimed in any of claims 10 to 15, wherein, during a normal video mode, data output from the first converter (114) is transferred directly to the second converter (132), via the multiplexer (130), for conversion into analog displayable video and audio signals for a visual display on a screen, and simultaneously to the record-play unit (118), via the encoder (116), for MPEG encoding and buffering in the background memory (124).

18. The digital video recording apparatus as claimed in claim 12, wherein, during a record/play mode, data output from the first converter (114) is transferred to the record-play unit (118), via the encoder (116), for MPEG encoding and buffering in the background memory (124), and via the decoder (126), for MPEG decoding prior forwarding to the second converter (132), via the multiplexer (130), for conversion into analog displayable video and audio signals for a visual display on a screen.
